# EUROPEAN PATENT SPECIFICATION

(11) **EP 3 637 846 B1**
(45) Date of publication and mention of the grant of the patent: **19.07.2023**
(21) Application number: 18794480.6
(22) Date of filing: 04.05.2018
(51) Int. Cl.: H04W 28/08, H04W 28/086

(54) **METHOD AND DEVICE FOR USE IN CONFIGURING NOVEL QUALITY OF SERVICE ARCHITECTURE IN DUAL CONNECTIVITY SYSTEM**
VERFAHREN UND VORRICHTUNG ZUR VERWENDUNG IN DER KONFIGURATION VON NEUARTIGER DIENSTQUALITÄTSARCHITEKTUR IN DUALKONNEKTIVITÄTSSYSTEM
PROCÉDÉ ET DISPOSITIF À UTILISER DANS LA CONFIGURATION D'UNE NOUVELLE ARCHITECTURE DE QUALITÉ DE SERVICE DANS UN SYSTÈME À DOUBLE CONNECTIVITÉ

(30) Priority: 05.05.2017 CN 201710312757
(43) Date of publication of application: 15.04.2020
(73) Proprietor: ZTE Corporation, Shenzhen, Guangdong 518057 (CN)
(72) Inventor: WANG, Xin, Shenzhen, Guangdong 518057 (CN); HUANG, He, Shenzhen, Guangdong 518057 (CN); MA, Zijiang, Shenzhen, Guangdong 518057 (CN)
(74) Representative: Aipex B.V.
(86) International application number: PCT/CN2018/085680
(87) International publication number: WO 2018/202153

(56) References cited:
- EP-A1- 2 836 012
- EP-A1- 3 026 958
- WO-A1-2016/021822
- CN-A- 104 427 554
- CN-A- 105 637 920
- CN-A- 106 576 255

## Description

### TECHNICAL FIELD

The present application relates to the field of communications, and in particular, to a method and a device for configuring a new quality of service architecture in a dual-connectivity system, and a storage medium.

### BACKGROUND

In the fifth Generation (5G) communication system, a new Quality of Service (QoS) architecture is employed between a User Equipment (UE) and an NextGen Core Network (NG-CN) or an NextGen Access Network (NG-RAN). The NG-RAN includes at least an Evolved Long Term Evolution (eLTE) base station (Node B, NB) capable of providing Evolved Universal Terrestrial Radio Access (E-UTRA) and a next generation base station (Generation Node B, gNB) capable of providing New Radio (NR) Access.

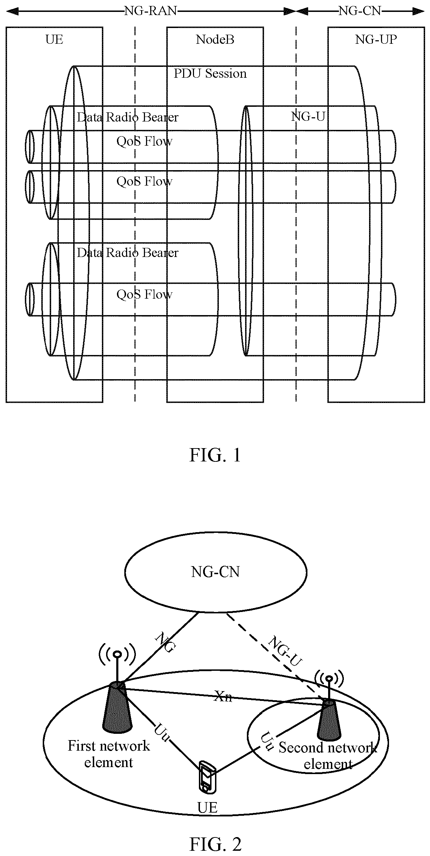

The new QoS architecture is shown in FIG. 1. In the new QoS architecture, an NG-CN establishes at least one Protocol Data Unit Session (PDU Session) for each UE, and the NG-CN and the UE allocate uplink and downlink data packets to corresponding QoS Flows (QFs) by using a packet filter of a Non-Access Stratum (NAS). Each QF has its QoS profile (e.g., reliability, delay, rate, etc). In the establishing process of each PDU session, the NG-RAN establishes at least one Data Radio Bearer (DRB) for each UE, and the NG-RAN and the UE will allocate the uplink and downlink QFs to the corresponding DRBs by using the mapping of the Access Stratum (AS), where each DRB has its own Data packet forwarding mode.

The NG-RAN maps data packets belonging to different PDU sessions to different DRBs. Therefore, during the establishment of each PDU session, the NG-RAN establishes at least one default DRB for the currently established PDU session, and whether to establish a dedicated DRB is determined by the NG-RAN. For downlink, the NG-RAN determines the mapping relationship between QFs and DRBs based on an QF Identity (QF ID) of a data packet transmitted on an NG User Plane (NG-U) between the NG-RAN and the NG-CN and a QoS profile corresponding to the QF ID. For uplink, the UE sends the uplink data packet to the NG-RAN via the radio interface (Uu), where the uplink data packet is identified by the QF ID and carried on the corresponding DRB. Further, the NG-RAN has at least two methods for controlling the mapping between the QF uplink data packets and the DRBs, that is, a Reflective mapping method and an Explicit Configuration method. If an uplink data packet does not have the relevant information required by the two methods, the UE can map the uplink data packet to the default DRB of the PDU session to which the uplink data packet belongs for transmission.

FIG. 2 shows a system architecture form called Dual Connectivity (DC). In the DC system, for a UE with multiple receivers and transmitters (Rx/Tx), the current serving base station (referred to as a first network element) of the UE in the NG-RAN may select an appropriate base station (for example, quality of a radio channel satisfies a certain threshold) for the UE and add it for the UE (the base station added for the UE is referred to as a second network element), so that the two base stations can jointly provide radio resources for the UE for user plane data transmissions. For wired interfaces, an NG Control Plane (NG-C) interface is established between the first network element and the NG-CN for the UE, an NG-U interface is at most established between the second network element and the NG-CN for the UE, and the first network element and the second network element are connected through an ideal or non-ideal interface (referred to as an Xn interface). For radio interfaces, the first network element and the second network element may provide the same radio access technology (RAT) or different RATs and independently perform scheduling for the UE.

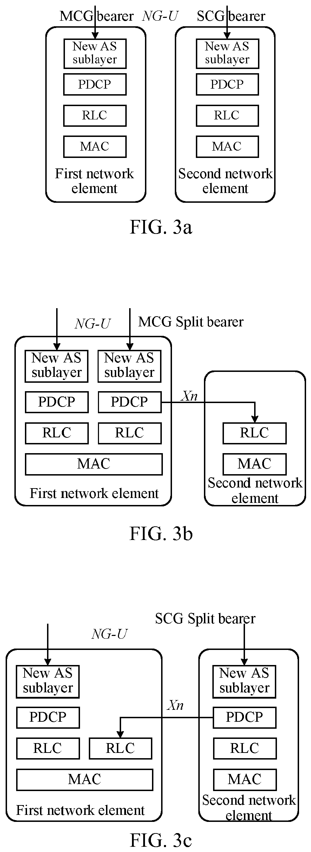

As shown in FIG.3, four types of user plane bearers may be configured in a DC system. For a bearer, FIG. 3a shows two bearer types when the complete Layer 2 (L2) protocol stack is located at the same base station. In this user plane mode, the first network element and the second network element establish NG-U interfaces with the NG-CN, respectively. FIGS. 3b and 3c show two bearer types when the L2 protocol stack is located in two base stations. In this user plane mode, only the first network element will establish an NG-U interface with the NG-CN, and the data packet transmission between the second network element and the first network element is only through the user plane (Xn-U) of the Xn interface. Further, the L2 protocol stack includes a Packet Data Convergence Protocol (PDCP) sublayer, a Radio Link Control (RLC) sublayer, a Medium Access Control (MAC) sublayer, and a new AS sublayer for mapping QF and DRB. For the user plane mode corresponding to FIG. 3a, the bearer whose L2 protocol stack is in the first network element is referred to as a Master Cell Group (MCG) bearer, and the bearer whose the L2 protocol stack is in the second network element is referred to as a Secondary Cell Group (SCG) bearer. For the user plane modes corresponding to FIGS. 3b and 3c, two sets of RLC sublayer and MAC sublayer are configured for the bearers, and the two sets of RLC sublayer and MAC sublayer are independent and located in two base stations. The bearer configured with only the RLC sublayer and the MAC sublayer on the second network element in FIG. 3b is referred to as an MCG split bearer, and the bearer configured with only the RLC sublayer and the MAC sublayer on the first network element in FIG. 3c is referred to as an SCG split bearer.

For the technical problem of how to establish of a user plane bearer in a dual-connectivity architecture under a new QoS architecture and transmit data on the user plane bearer, no effective solution is provided yet at present.

The reference EP 2836012 A1 discloses a method, in a radio communication system, for setup or modification of data flows between user equipment (UE) in dual connectivity with a primary node and a secondary node of the system. The reference EP 3026958 A1 discloses a method and an eNB for coordinated multi-stream transmission of data, which relate to mobile communication systems.

### SUMMARY

This invention is defined by the appended claims.

To solve the above technical problem, embodiments of the present application provide a method and a device for configuring a new quality of service architecture in a dual-connectivity system.

The following is provided by the present application.

A method for configuring a new quality of service architecture in a dual-connectivity system includes the following steps.

When a protocol data unit (PDU) session of a user equipment (UE) needs to be offloaded, a first network element makes an offloading decision. The offloading decision includes at least an offloading granularity, an offloading object and an offloading bearer type.

According to the offloading decision, the first network element sends a control plane message to the second network element. The control plane message is used for requesting the second network element to perform admission decision and resource configuration of offloading resources, and carries offloading resource information which includes offloading object information and offloading bear type information.

The offloading granularity includes one of the following: offloading all the quality of service flow (QFs) in the PDU session to a second network element; offloading part of the QFs in the PDU session to a second network element; or offloading part of data packets in all or part of QFs in the PDU session to a second network element.

The offloading object is one of the following: all QFs in the PDU session; part of QFs in the PDU session; or part of data packets in all or part of QFs in the PDU session.

The offloading bear type includes one or any combination of the following: a secondary cell group (SCG) bearer; a SCG split bearer; and a master cell group (MCG) split bearer.

Before the first network element makes the offloading decision, the method further includes the steps described below.

According to one or two of a current radio signal condition and a network load condition, the first network element performs radio resource management, and determines whether the PDU session needs to be offloaded.

The offloading object information includes at least a QF ID of a QF offloaded to the second network element and a QoS configuration profile corresponding to the QF ID.

The offloading resource information further includes radio resource traffic information corresponding to the offloading object.

When the offloading granularity is to offload all QFs in the PDU session to the second network element, the offloading resource information includes one or a combination of the following:
information of the PDU session; and
access stratum security related information.

The information of the PDU session includes at least one or a combination of the following:
an identity of the PDU session;
an aggregate maximum bit rate of the PDU session; and
a transport layer address and a tunnel port address allocated by a next generation Core Network (NG-CN) for the PDU session.

When the offloading granularity is to offload part of QFs in the PDU session to the second network element, the offloading resource information further includes one or a combination of the following:
information of a transport layer address and a tunnel port address, allocated by the NG-CN, of the offloading object on a next generation user plane (NG-U) interface between a next generation Radio Access Network and the NG-CN;
a first indication for notifying the second network element to establish a default data radio bearer for the PDU session; and
access stratum security related information.

When the offloading granularity is to offload all or part of QFs in the PDU session to the second network element, the offloading resource information further includes a second indication for suggesting the second network element to accept a downlink data packet forwarded by the first network element.

When the offloading granularity is to offload part of all or part of QFs in the PDU session to the second network element, the offloading resource information further includes one or a combination of the following:
configuration information of a radio protocol stack of an offloading bearer on a first network element side; and
mapping information between the offloading bearer on the first network element side and a corresponding QF.

When the offloading bearer supports uplink split, the offloading resource information includes information of a tunnel port address allocated by the first network element on the Xn-U interface for the offloading bearer.

After sending the control plane message to the second network element, the method further includes: receiving a response message from the second network element, where the response message carries radio resource configuration information made by the second network element for the UE; and
generating RRC signaling for the UE and sending the RRC signaling to the UE, where the RRC signaling includes at least the radio resource configuration information made by the second network element for the UE.

After the RRC signaling for the UE is generated and sent to the UE, the method further includes: receiving an acknowledgement message from the UE, where the acknowledgement message is used for indicating that the UE successfully applies the radio resource configuration made by a second network element for the UE; and sending a control plane acknowledgement message to the second network element, where the control plane acknowledgement message is used for indicating that the UE successfully applies the radio resource configuration made by the second network element for the UE.

When the offloading bearer is an SCG split bearer, the control plane acknowledgement message further includes: information of the tunnel port address of the Xn-U interface allocated by the first network element for the SCG split bearer.

When the offloading bearer is the SCG split bearer, the method further includes: after receiving the response message from the second network element, sending an Xn-C interface message to the second network element, where the Xn-C interface message carries information of the tunnel port address allocated for the SCG split bearer by the first network element at an Xn-U interface.

A device for configuring a new quality of service architecture in a dual-connectivity system includes a decision module and a first sending module.

The decision module is configured to make an offloading decision when a Protocol Data Unit (PDU) session of a User Equipment (UE) needs to be offloaded, where the offloading decision includes at least an offloading granularity, an offloading object, and an offloading bear type.

The first sending module is configured to send a control plane message to a second network element according to the offloading decision, where the control plane message is used for requesting the second network element to perform an admission decision and resource configuration of offloading resources. The control plane message carries offloading resource information, which includes offloading object information and offloading bear type information.

The offloading granularity includes one of the following: offloading all of quality of service flow QFs in the PDU session to the second network element; offloading part of the QFs in the PDU session to a second network element; or offloading part of data packets in all or part of QFs in the PDU session to a second network element.

The offloading object is one of the following: all QFs in the PDU session; part of QFs in the PDU session; or part of data packets in all or part of QFs in the PDU session.

The offloading bear type includes one or any combination of the following: a secondary cell group (SCG) bearer; an SCG split bearer; and a master cell group (MCG) split bearer.

Before making an offloading decision, the decision module is configured to perform radio resource management according to one or two of the current radio signal condition and the network load condition, and determine whether the PDU session needs to be offloaded.

The offloading object information includes at least: a QF ID of a QF offloaded to the second network element and a QoS configuration profile corresponding to the QF ID.

The offloading resource information further includes: radio resource traffic information corresponding to the offloading object.

When the offloading granularity is to offload all QFs in the PDU session to the second network element, the offloading resource information includes one or a combination of the following:
information of the PDU session; and
access stratum security related information.

The information of the PDU session at least includes one or a combination of the following:
an identity of the PDU session;
an aggregated maximum bit rate of the PDU session; and
a transport layer address and a tunnel port address allocated by a next generation Core Network (NG-CN) for the PDU session.

When the offloading granularity is to offload part of QFs in the PDU session to the second network element, the offloading resource information further includes one or a combination of the following:
information of a transport layer address and tunnel port address, allocated by an NG-CN, of the offloading object on a next generation user plane (NG-U) interface between a next generation Radio Access Network and the NG-CN;
a first indication for notifying the second network element to establish a default data radio bearer for the PDU session; and
access stratum security related information.

When the offloading granularity is to offload all or part of QFs in the PDU session to the second network element, the offloading resource information further includes: a second indication used for suggesting the second network element to accept the downlink data packet forwarded by the first network element.

When the offloading granularity is to offload part of data packets of all or part of QFs in the PDU session to the second network element, the offloading resource information further includes one or a combination of the following:
configuration information of a radio protocol stack of an offloading bearer on a first network element side; and
mapping information between the offloading bearer on the first network element side and a corresponding QF.

When the offloading bearer supports uplink split, the offloading resource information further includes information of a tunnel port address allocated by the first network element on the Xn-U interface for the offloading bearer.

The device further includes a first receiving module and a second sending module. The first receiving module is configured to receive a response message from the second network element. The response message carries radio resource configuration information made by the second network element for the UE.

The second sending module is configured to generate RRC signaling for the UE and send the RRC signaling to the UE, where the RRC signaling includes at least the radio resource configuration information made by the second network element for the UE.

The device further includes: a second receiving module configured to receive an acknowledgement message from the UE. The acknowledgement message indicates that the UE successfully applies radio resource configuration made by the second network element for the UE.

The first sending module is further configured to send a control plane acknowledgement message to the second network element, where the control plane acknowledgement message indicates that the UE successfully applies the radio resource configuration made by the second network element for the UE.

When the offloading bearer is an SCG split bearer, the control plane acknowledgement message further includes information of a tunnel port address allocated by the first network element for the SCG split bearer at an Xn-U interface.

The device further includes: the first sending module. When the offloading bearer is an SCG split bearer, the first sending module is further configured to send an Xn-C interface message to the second network element, where the Xn-C interface message carries the information of the tunnel port address allocated by the first network element for the SCG split bearer at an Xn-U interface.

A method for configuring a new quality of service architecture in a dual-connectivity system includes the steps described.

A second network element receives a control plane message from a first network element. The control plane message carries offloading resource information.

According to the offloading resource information carried by the control plane message, the second network element performs an admission decision of the offloading resource.

When the result of the admission decision is admission, the second network element performs radio resource configuration for the admitted offloading resources and obtains corresponding radio resource configuration information, wherein the offloading resource information comprises: offloading object information and offloading bearer type information,wherein the offloading granularity comprises one of the following: offloading all of quality of service flows, QFs, in the PDU session to the second network element;offloading part of the QFs in the PDU session to the second network element; oroffloading part of data packets in all or part of the QFs in the PDU session to the second network element,wherein the offloading object is one of the following:all of QFs in the PDU session;part of the QFs in the PDU session; orpart of data packets in all or part of the QFs in the PDU session,wherein the offloading bearer type comprises one or any combination of the following:a secondary cell group, SCG, bearer;an SCG split bearer; ora master cell group, MCG, split bearer.

When an offloading object is all or part of QFs in a Protocol Data Unit (PDU) session, the radio resource configuration information includes at least: mapping relationship information between the offloading object and an offloading bearer; configuration information of a radio protocol stack of the offloading bearer on the second network element side; and information of a transport layer address and a tunnel port address allocated for the offloading object at an NG-U interface.

The offloading resource information includes a first indication for notifying the second network element to establish a default data radio bearer for the PDU session. The radio resource configuration includes: establishing a default data radio bearer for the PDU session according to the first indication. The radio resource configuration information includes: a default indication for identifying the default data radio bearer.

When an offloading bearer is an SCG split bearer, the radio resource configuration information includes division result information of radio resource traffic.

When the SCG split bearer supports uplink split, the radio resource configuration information includes information of a tunnel port address allocated for the SCG split bearer at the Xn-U interface.

When the offloading object is part of data packets in all or part of QFs in a PDU session, the radio resource configuration information includes at least:
configuration information of a radio protocol stack of an offloading bearer on the second network element side; and
information of a tunnel port address allocated by the second network element for the offloading bearer at the Xn-U interface.

When the offloading resource information includes the second indication, the method further includes:
in response to determining to accept a forwarded data packet suggested in the second indication, the radio resource configuration information includes information of the tunnel port address at the Xn-U interface for receiving the forwarded data packet, where the information is allocated by the second network element.

A device for configuring a new quality of service architecture in a dual-connectivity system includes a third receiving module, an admission decision module and a resource configuration module.

The third receiving module is configured to receive a control plane message from a first network element, where the control plane message carries offloading resource information.

The admission decision module is configured such that a second network element performs an admission decision of the offloading resource according to the offloading resource information carried by the control plane message.

The resource configuration module is configured such that when a result of the admission decision is admission, the second network element performs radio resource configuration for the admitted offloading resources and obtains corresponding radio resource configuration information, wherein the offloading resource information comprises: offloading object information and offloading bearer type information,wherein the offloading granularity comprises one of the following: offloading all of quality of service flows, QFs, in the PDU session to the second network element;offloading part of the QFs in the PDU session to the second network element; oroffloading part of data packets in all or part of the QFs in the PDU session to the second network element,wherein the offloading object is one of the following:all of QFs in the PDU session;part of the QFs in the PDU session; orpart of data packets in all or part of the QFs in the PDU session,wherein the offloading bearer type comprises one or any combination of the following:a secondary cell group, SCG, bearer;an SCG split bearer; ora master cell group, MCG, split bearer.

When an offloading object is all or part of QFs in a PDU session, the radio resource configuration information includes at least:
mapping relationship information between the offloading object and an offloading bearer;
configuration information of a radio protocol stack of the offloading bearer on the second network element side; and
information of a transport layer address and a tunnel port address allocated by the second network element for the offloading object at an NG-U interface.

The offloading resource information includes a first indication for notifying the second network element to establish a default data radio bearer for the PDU session.

The resource configuration module is configured to establish a default data radio bearer for the PDU session according to the first indication; and the radio resource configuration information includes: a default indication for identifying for the default data radio bearer.

When the offloading bearer is an SCG split bearer, the radio resource configuration information includes division result information of radio resource traffic, made by the second network element.

When the SCG split bearer supports uplink split, the radio resource configuration information includes information of a tunnel port address allocated for the SCG split bearer at the Xn-U interface.

When the offloading object is part of data packets in all or part of QFs in a PDU session, the radio resource configuration information includes at least:
configuration information of a radio protocol stack of an offloading bearer on the second network element side; and
information of the tunnel port address allocated by the second network element for the offloading bearer at the Xn-U interface.

When the offloading resource information includes a second indication, the resource configuration module is further configured to cause, in response to determining to accept a forwarded data packet suggested in the second indication, the radio resource configuration information to include information of a tunnel port address for receiving the forwarded data packet, where the tunnel port address is at the Xn-U interface and allocated by the second network element.

A not claimed device for configuring a new quality of service architecture in a dual-connectivity system includes a memory and a processor.

The memory stores a configuration program.

The processor is configured to execute the configuration programs to perform the following operations.
making an offloading decision when a Protocol Data Unit (PDU) session of a User Equipment (UE) needs to be offloaded, where the offloading decision includes at least an offloading granularity, an offloading object, and an offloading bear type;
according to the offloading decision, sending a control plane message to a second network element, where the control plane message is used for requesting the second network element to perform an admission decision and resource configuration of offloading resources, and carries offloading resource information, which includes offloading object information and offloading bear type information.

A not claimed computer-readable storage medium stores a configuration program which, when executed by a processor, performs the steps of the above-described method for configuring a new quality of service architecture in a dual-connectivity system.

A device for configuring a new quality of service architecture in a dual-connectivity system includes a memory and a processor.

The memory stores a configuration program.

The processor is configured to perform the configuration programs to perform the following operations:
receiving a control plane message from a first network element, where the control plane message carries offloading resource information;
according to the offloading resource information carried by the control plane message, performing an admission decision of the offloading resource;
in response to the result of the admission decision being admission, performing the radio resource configuration for the admitted offloading resources and obtaining the corresponding radio resource configuration information.

A computer-readable storage medium stores a configuration program which, when executed by a processor, performs the steps of the above-described method for configuring a new quality of service architecture in a dual-connectivity system.

According to the embodiments of the present application, two network elements (such as service base stations) can effectively perform reasonable configuration on the user plane bearer of the UE, the establishment of the user plane bearer of the dual-connectivity system under a new QoS (quality of service) architecture is achieved, and the data transmission can be performed on the user plane bearer, so that the uplink and downlink data can be efficiently and correctly transmitted on both a radio interface and a wired interface, the transmission performance requirement of the user plane data in a 5G system is met, and the user experience is improved.

Other features and advantages of the present application will be elaborated hereinafter in the description and, moreover, partially become apparent from the description, or will be understood through implementation of the present application. The object and other advantages of the present application may be achieved and obtained through structures set forth in the description, claims and drawings.

### BRIEF DESCRIPTION OF DRAWINGS

The drawings provide a further understanding of the technical solutions of the present application, and constitute a part of the description. The drawings and the embodiments of the present application are used for explaining the technical solutions of the present application, and are not intended to limit the technical solutions of the present application.
FIG. 1 is a schematic view of a new QoS architecture;
FIG. 2 is a schematic view of a dual-connectivity system;
FIG. 3a is a schematic view of user plane modes of two bearer types when layer 2 protocol stacks in a dual-connectivity system are both located in the same base station;
FIG. 3b is a schematic view of a user plane mode of an MCG split bearer when layer 2 protocol stacks in a dual-connectivity system are located in the two base stations;
FIG. 3c is a schematic view of a user plane mode of a SCG split bearer when layer 2 protocol stacks in a dual-connectivity system are located in the two base stations;
FIG. 4 is a flowchart illustrating a configuration method according to an embodiment one;
FIG. 5 is a structural view of a configuration device according to an embodiment two;
FIG. 6 is a flowchart illustrating a configuration method according to an embodiment three;
FIG. 7 is a structural view of a configuration device according to an embodiment four;
FIG. 8 is a flowchart of an example one;
FIG. 9 is a flowchart of an example two; and
FIG. 10 is a flowchart of an example three.

### DETAILED DESCRIPTION

The object, technical solution and advantages of the present application will be clearer from a detailed description of embodiments of the present application in conjunction with the drawings. It is to be noted that if not in collision, the embodiments and features therein in the present application may be combined with each other.

The steps shown in the flowcharts among the drawings may be performed by a computer system such as a group of computers capable of executing instructions. Although logical sequences are shown in the flowcharts, the shown or described steps may be performed in sequences different from those described herein in some cases.

### Embodiment one

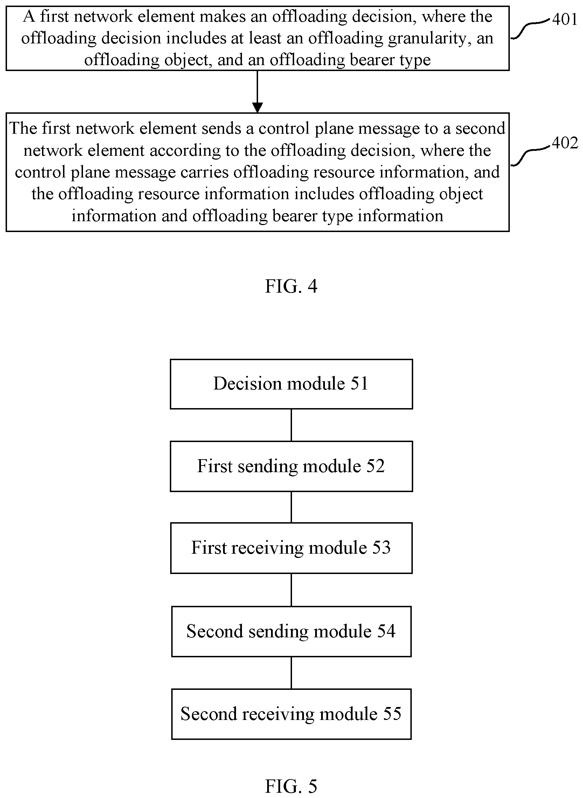

A method for configuring a new quality of service architecture in a dual-connectivity system, as shown in FIG. 4 includes the steps described below.

In step 401, a first network element makes an offloading decision when a Protocol Data Unit (PDU) session of a User Equipment (UE) needs to be offloaded. The offloading decision includes at least an offloading granularity, an offloading object, and an offloading bear type.

In step 402, according to the offloading decision, the first network element sends a control plane message to a second network element. The control plane message is used for requesting the second network element to perform an admission decision and resource configuration of offloading resources, and carries offloading resource information. The offloading resource information includes offloading object information and offloading bear type information.

The configuration method in the present embodiment may be performed by the first network element. The first network element refers to a base station or other similar network elements that currently provide a communication service for the UE.

With the method of the present embodiment, the first network element and the second network element (such as two service base stations) can effectively perform reasonable configuration on the user plane bearer of the UE, the establishment of the user plane bearer of the dual-connectivity system under a new QoS architecture is achieved, and the data transmission can be performed on the user plane bearer, so that the uplink and downlink data can be efficiently and correctly transmitted on a radio interface and a wired interface, the transmission performance requirement of the user plane data in a 5G system is met, and the use experience of a user is improved.

In the present embodiment, the offloading resource refers to a resource that is offloaded to the second network element by the first network element, and the offloading resource may be an offloading object, an offloading bearer, and the like.

It is to be noted that the offloading decision may also be a decision made by the first network element according to a request of the second network element.

The offloading granularity includes, but is not limited to, one of the following.
a) the PDU session is completely offloaded to the second network element, that is, the offloading granularity includes all QFs in the PDU session.
b) only part of QFs in the PDU session is offloaded to the second network element.
c) only part of the data packets in all or part of QFs is offloaded to the second network element.

The offloading object is one of the following:
all QFs in the PDU session;
part of QFs in the PDU session; and
part of data packets in all or part of QFs in the PDU session.

Specifically, when "a" is selected as the offloading granularity, the offloading object is all QFs in the PDU session. When "b" or "c" is selected as the offloading granularity, the offloading object refers to QFs in the PDU session which are to be offloaded.

The offloading bear type includes one or any combination of the following: an SCG bearer; an SCG split bearer; or an MCG split bearer. In practical applications, when "a" or "b" is selected as the offloading granularity, the offloading bear type may be an SCG bearer and/or an SCG split bearer; when "c" is selected as the offloading granularity, the offloading bear type may be an MCG split bearer.

In practical applications, before the first network element makes the offloading decision, the method may further include: according to one or two of the current radio signal condition and the network load condition, radio resource management is performed, and whether the PDU session needs to be offloaded (that is, whether it needs to cooperate with a second network element to provide DC service for the UE) is determined. The above method of the present embodiment may not be performed when it is determined that the PDU session does not need to be offloaded.

The offloading object information includes at least an identify of the offloading object (that is, QF ID) and a QoS profile corresponding to the QF ID. Alternatively, the offloading resource information may further include radio resource traffic information (e.g., bit rate, throughput, etc.) corresponding to the offloading object.

When the offloading granularity is to offload all QFs in the PDU session to the second network element, the offloading resource information further includes one or a combination of the following:
information of the PDU session; and
access stratum security related information.

The information of the PDU session includes at least one or a combination of the following:
an identity of the PDU session;
an aggregated maximum bit rate of the PDU session; and
a transport layer address and a tunnel port address allocated by the NG-CN for the PDU session.

When the offloading granularity is to offload part of QFs in the PDU session to the second network element, the offloading resource information further includes one or a combination of: 1) information of a transport layer address and tunnel port address information, allocated by an NG-CN, of the offloading object on a next generation user plane (NG-U) interface between a next generation Radio Access Network and the NG-CN; 2) a first indication for notifying the second network element to establish a default data radio bearer for the PDU session; and 3) access stratum security related information.

When the offloading granularity is to offload all or part of QFs in the PDU session to the second network element, the offloading resource information may further include a second indication used for suggesting the second network element to accept the downlink data packet forwarded by the first network element.

When the offloading granularity is to offload part of the data packets in all or part of QFs in the PDU session to the second network element, the offloading resource information further includes one or a combination of: 1) the configuration information of a radio protocol stack of an offloading bearer on the first network element side; and 2) the mapping relationship information of an offloading bearer at the first network element side and the corresponding QF.

When the offloading bearer supports uplink split, the offloading resource information includes tunnel port address information allocated by the first network element on the Xn-U interface for the offloading bearer.

After the control plane message is sent to the second network element, the method further includes: receiving a response message from the second network element, where the response message carries radio resource configuration information made by the second network element for the UE; and generating RRC signaling for the UE and sending the RRC signaling to the UE, where the RRC signaling includes at least the radio resource configuration information made by the second network element for the UE. Alternatively, the RRC signaling may also include radio resource configuration information made by the first network element for the UE.

After the RRC signaling for the UE is generated and sent to the UE, the method further includes: receiving an acknowledgement message from the UE, where the acknowledgement message is used for indicating that the UE successfully applies the radio resource configuration made by the second network element for the UE; and sending a control plane acknowledgement message to the second network element, where the control plane acknowledgement message is used for indicating that the UE successfully applies the radio resource configuration performed by the second network element for the UE.

When the offloading bearer is an SCG split bearer, the control plane acknowledgement message may further include tunnel port address information allocated by the first network element for the SCG split bearer at an Xn-U interface.

When the offloading bearer is the SCG split bearer, the method may further include: after receiving the response message from the second network element, sending an Xn-C interface message to the second network element, where the Xn-C interface message carries the tunnel port address information allocated by the first network element for the SCG split bearer at an Xn-U interface. In this way, the tunnel port address information allocated by the first network element for the SCG split bearer on the Xn-U interface can be carried by a new Xn-C interface message, and the first network element sends the new Xn-C interface message to the second network element after receiving the response message sent by the second network element for the control plane request message.

### Embodiment two

A device for configuring a new quality of service architecture in a dual-connectivity system, as shown in FIG. 5 includes a decision module 51 and a first sending module 52.

The decision module 51 is configured to make an offloading decision when a Protocol Data Unit (PDU) session of a User Equipment (UE) needs to be offloaded. The offloading decision includes at least an offloading granularity, an offloading object, and an offloading bear type.

The first sending module 52 is configured to send a control plane message to a second network element according to the offloading decision. The control plane message is used for requesting the second network element to perform an admission decision and resource configuration of offloading resources, and carries offloading resource information. The offloading resource information includes offloading object information and offloading bear type information.

The offloading granularity includes one of the following:
offloading all the quality of service flow (QFs) in the PDU session to the second network element;
offloading part of the QFs in the PDU session to the second network element; and
offloading part of data packets in all or part of the QFs in the PDU session to the second network element.

The offloading object is one of the following:
all QFs in the PDU session;
part of QFs in the PDU session; and
part of data packets in all or part of QFs in the PDU session.

The offloading bear type includes one or any combination of the following:
a secondary cell group (SCG) bearer;
a SCG split bearer; and
a master cell group (MCG) split bearer.

Before making an offloading decision, the decision module 51 is configured to perform radio resource management according to one or two of the current radio signal condition and the network load condition, and determine whether the PDU session needs to be offloaded.

The offloading object information includes at least: the QF ID of the QF offloaded to the second network element and the QoS configuration profile corresponding to the QF ID.

The offloading resource information further includes: radio resource traffic information corresponding to the offloading object.

When the offloading granularity is to offload all QFs in the PDU session to the second network element, the offloading resource information further includes one or a combination of the following: information of the PDU session; and access stratum security related information. The information of the PDU session includes at least one or a combination of the following: an identity of the PDU session; an aggregated maximum bit rate of the PDU session; and a transport layer address and a tunnel port address allocated by the NG-CN for the PDU session.

When the offloading granularity is to offload part of QFs in the PDU session to the second network element, the offloading resource information further includes one or a combination of: transport layer address and tunnel port address information allocated by an NG-CN for the offloading object on an NG-U interface between a next generation Radio Access Network and the NG-CN; a first indication for notifying the second network element to establish a default data radio bearer for the PDU session; and access stratum security related information.

When the offloading granularity is to offload all or part of QFs in the PDU session to the second network element, the offloading resource information further includes a second indication used for suggesting the second network element to accept the downlink data packet forwarded by the first network element.

When the offloading granularity is to offload part of the data packets in all or part of QFs in the PDU session to the second network element, the offloading resource information further includes one or a combination of: configuration information of a radio protocol stack of an offloading bearer on a first network element side; and mapping relationship information between the offloading bearer on the first network element side and a corresponding QF.

When the offloading bearer supports uplink split, the offloading resource information further includes tunnel port address information allocated by the first network element for the offloading bearer at the Xn-U interface.

The device further includes a first receiving module 53 and a second sending module 54. The first receiving module 53 is configured to receive a response message from the second network element, where the response message carries radio resource configuration information made by the second network element for the UE. The second sending module 54 is configured to generate RRC signaling for the UE and send the RRC signaling to the UE, where the RRC signaling includes at least radio resource configuration information made by the second network element for the UE.

The device further includes a second receiving module 55, which is configured to receive an acknowledgement message from the UE. The acknowledgement message is used for indicating that the UE successfully applies the radio resource configuration made by the second network element for the UE. The first sending module 52 may be further configured to send a control plane acknowledgement information to the second network element, where the control plane acknowledgement information is used for indicating that the UE successfully applies the radio resource configuration made by the second network element for the UE.

When the offloading bearer is an SCG split bearer, the control plane acknowledgement message further includes tunnel port address information allocated by the first network element for the SCG split bearer at an Xn-U interface.

When the offloading bearer is an SCG split bearer, the first sending module 52 is configured to send an Xn-C interface message to the second network element, where the Xn-C interface message carries the tunnel port address information allocated by the first network element for the SCG split bearer at the Xn-U interface.

All details of the method in the embodiment one can be achieved by the configuration device in the present embodiment, and the relevant description of the method can be referred to. In practical applications, the configuration device in the present embodiment may be disposed on the first network element or other similar devices to perform the above functions, or the configuration device in the present embodiment may be implemented directly through the first network element or other similar devices.

In practical applications, the decision module 51, the first sending module 52, the first receiving module 53, the second sending module 54, and the second receiving module 55 can be implemented by means of software, hardware, or a combination thereof. For example, the first sending module 52, the first receiving module 53, the second sending module 54, and the second receiving module 55 may be implemented by a processor of the first network element controlling a communication unit thereof, and the decision module 51 may be implemented by the processor of the first network element. No limitation is made herein.

### Embodiment three

A device for configuring a new quality of service architecture in a dual-connectivity system includes a memory and a processor.

The memory stores a configuration program.

The processor is configured to execute the configuration program to perform the following operations.

An offloading decision is made when a Protocol Data Unit (PDU) session of a User Equipment (UE) needs to be offloaded. The offloading decision includes at least an offloading granularity, an offloading object, and an offloading bear type.

According to the offloading decision, a control plane message is sent to a second network element, where the control plane message is used for requesting the second network element to perform an admission decision and resource configuration of offloading resources. The control plane message carries offloading resource information, which includes offloading object information and offloading bear type information.

All details of the method in the embodiment one can be achieved by the configuration device in the present embodiment, and the relevant description of the method can be referred to. In practical applications, the configuration device in the present embodiment may be disposed in the first network element or other similar devices to perform the above functions, or the configuration device in the present embodiment may be implemented directly through the first network element or other similar devices.

### Embodiment four

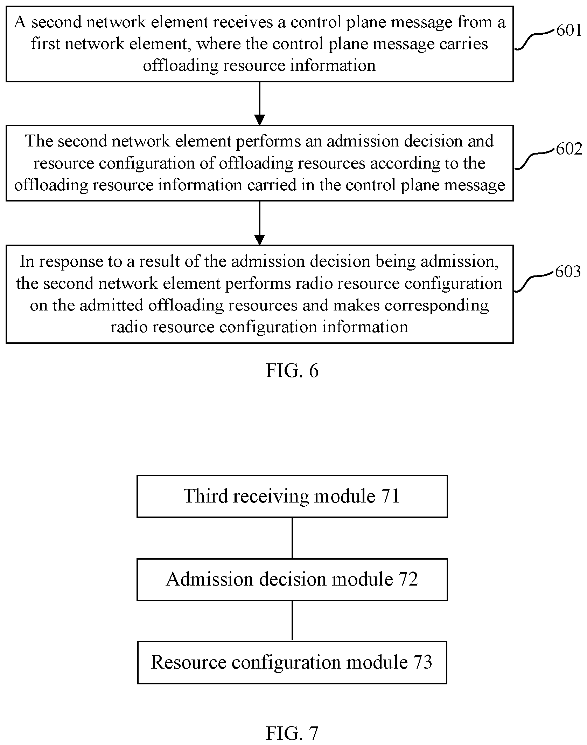

A method for configuring a new quality of service architecture in a dual-connectivity system, as shown in FIG. 6 includes the steps described below.

In step 601, a second network element receives a control plane message from a first network element. The control plane message carries offloading resource information.

In step 602, according to the offloading resource information carried by the control plane message, the second network element performs an admission decision of the offloading resource.

In step 603, when a result of the admission decision is admission, the second network element performs radio resource configuration for the admitted offloading resources and obtains corresponding radio resource configuration information.

In practical applications, the configuration method of the present embodiment may be performed by the second network element.

With the method of the present embodiment, the user plane bearer between the first network element and the second network element (such as two service base stations) can effectively and reasonably configured for the UE, the establishment of the user plane bearer of the dual-connectivity system under a new QoS architecture is achieved, and the data transmission can be performed on the user plane bearer, so that the uplink and downlink data can be efficiently and correctly transmitted on a radio interface and a wired interface, the transmission performance requirement of the user plane data in a 5G system is met, and the use experience of a user is improved.

In the present embodiment, the second network element makes an admission decision according to the control plane message from the first network element, and performs radio resource configuration for the admitted offloading resources when admission is allowed. The admission decision refers to: if the current resource load condition of the second network element can satisfy the request corresponding to the offloading resource (that is, QF), the second network element decides to admit the request of the first network element; otherwise, the decision is rejection. For the offloading resources the second network element decides to admit, the second network element performs radio resource configuration and obtains corresponding radio resource configuration information.

When an offloading object is all or part of QFs in a PDU session, the radio resource configuration information includes at least:
mapping relationship information between the offloading object and an offloading bearer;
configuration information of a radio protocol stack (including L2 and a physical layer) of the offloading bearer on the second network element side; and
transport layer address and tunnel port address information allocated for the offloading object at an NG-U interface.

In practical applications, the second network element establishes a default DRB for the PDU session, and the radio resource configuration information needs to identify which offloading bearer is the default DRB. That is, the offloading resource information includes a first indication for notifying the second network element to establish a default data radio bearer for the PDU session. The radio resource configuration includes: establishing a default data radio bearer for the PDU session according to the first indication; and the radio resource configuration information includes: a default indication for identifying the default data radio bearer.

When the offloading bearer is an SCG split bearer, the radio resource configuration information includes division result information of radio resource traffic. When the SCG split bearer supports uplink split, the radio resource configuration information includes tunnel port address information allocated by the second network element for the SCG split bearer at an Xn-U interface.

When the offloading object is part of data packets in all or part of QFs in a PDU session, the radio resource configuration information includes at least: configuration information of a radio protocol stack (RLC sublayer, MAC sublayer and physical layer) of an offloading bearer on the second network element side; and tunnel port address information allocated by the second network element for the offloading bearer at the Xn-U interface.

When the offloading resource information includes a second indication, the method further includes: in response to determining to accept a forwarded data packet suggested in the second indication, the radio resource configuration information includes tunnel port address information of the Xn-U interface for receiving the forwarded data packet, where the tunnel port address is allocated by the second network element.

### Embodiment five

A device for configuring a new quality of service architecture in a dual-connectivity system, as shown in FIG. 7 includes a third receiving module 71, an admission decision module 72 and a resource configuration module 73.

The third receiving module 71 is configured to receive a control plane message from a first network element. The control plane message carries offloading resource information.

The admission decision module 72 is configured such that a second network element performs an admission decision of the offloading resources according to the offloading resource information carried by the control plane message.

The resource configuration module 73 is configured such that when the result of the admission decision is admission, the second network element performs radio resource configuration for the admitted offloading resources and obtains corresponding radio resource configuration information.

When the offloading object is all QFs in a Protocol Data Unit (PDU) session or part of QFs in the PDU session, the radio resource configuration information includes at least: mapping relationship information between the offloading object and an offloading bearer; configuration information of a radio protocol stack of the offloading bearer on a second network element side; and transport layer address and tunnel port address information allocated by the second network element for the offloading object at an NG-U interface.

The offloading resource information includes a first indication for notifying the second network element to establish a default data radio bearer for the PDU session. The resource configuration module 73 is configured to establish a default data radio bearer for the PDU session according to the first indication. The radio resource configuration information includes: a default indication for identifying for the default data radio bearer.

When the offloading bearer is an SCG split bearer, the radio resource configuration information includes division result information of radio resource traffic made by the second network element. When the SCG split bearer supports uplink split, the radio resource configuration information includes tunnel port address information allocated by the second network element for the SCG split bearer at an Xn-U interface.

When the offloading object is part of data packets in all or part of QFs in a PDU session, the radio resource configuration information includes at least: configuration information of a radio protocol stack of an offloading bearer on a second network element side; and the tunnel port address information allocated by the second network element for the offloading bearer at the Xn-U interface.

When the offloading resource information includes a second indication, the resource configuration module 73 is further configured to cause, in response to determining to accept a forwarded data packet suggested in the second indication, the radio resource configuration information to include tunnel port address information allocated by the second network element at the Xn-U interface for receiving the forwarded packet.

All details of the method in the embodiment four can be achieved by the configuration device in the present embodiment, and the relevant description of the method can be referred to. In practical applications, the configuration device in the present embodiment may be disposed in the second network element or other similar devices to perform the above functions, or the configuration device in the present embodiment may be implemented directly through the second network element or other similar devices.

In practice, the third receiving module 71, the admission decision module 72, and the resource configuration module 73 may respectively be implemented by software, hardware, or a combination thereof. For example, the third receiving module 71 may be implemented by a processor of the second network element controlling a communication unit thereof, and the admission decision module 72 and the resource configuration module 73 may be implemented by the processor of the second network element. No limitation is made herein.

### Embodiment six

A device for configuring a new quality of service architecture in a dual-connectivity system includes a memory and a processor.

The memory stores a configuration program.

The processor is configured to execute the configuration program to perform the following operations.

A control plane message is received from a first network element, where the control plane message carries offloading resource information.

An admission decision of the offloading resource is performed according to the offloading resource information carried by the control plane message;
When the result of the admission decision is admission, the radio resource configuration is performed for the admitted offloading resources and the corresponding radio resource configuration information is obtained.

All details of the method in embodiment four can be achieved by the configuration device in the present embodiment, and the relevant description of the method can be referred to. In practical applications, the configuration device in the present embodiment may be disposed in the second network element or other similar devices to perform the above functions, or the configuration device in the present embodiment may be implemented directly through the second network element or other similar devices.

In practical applications, from the perspective of the NG interface between the NG-RAN and the NG-CN, the above embodiments may occur during the establishment of the PDU session, during the modification of the PDU session, or in the case where control plane signaling procedure related to the PDU session does not occur at the NG interface. From the perspective of the Xn interface between the first network element and the second network element, the configuration process of the above embodiments may occur during the addition of the second network element or during the modification of the second network element.

In the above embodiments, when a certain PDU session offloading is established between two network elements (that is, the MCG bearer of the PDU session is established on the first network element side, the SCG split bearer and/or the SCG bearer of the PDU session is established on the second network element side), the first network element side and the second network element side may establish a default DRB for the UE (the default DRB can only be established on the first network element side, or established on the first network element side or the second network element side by network configuration), or two default DRBs (one is established on the first network element side and the other is established on the second network element side).

In practical application, if the UE needs to transmit an uplink data packet and the uplink data packet does not have any indication information to indicate which bearer the uplink data packet corresponds to, if a default data radio bearer is established only on the first network element side or the second network element side for the corresponding PDU session, the UE maps the uplink data packet on the default data radio bearer for transmission. If the PDU session establishes a default data radio bearer on each of the two network element sides, the UE may map the uplink data packet on a corresponding default DRB for transmission according to radio resource configuration information (that is, whether the uplink data packet belongs to an offloading object) indicated by the first network element.

Specific implementations of the above-described embodiments of the present application are described in detail below with reference to examples.

### Example one

A first network element receives a PDU session establishment request message indicated by the NG-CN when the first network element is providing communication service for a UE. The first network element performs radio resource management and may decide to offload the PDU session to a second network element for transmission.

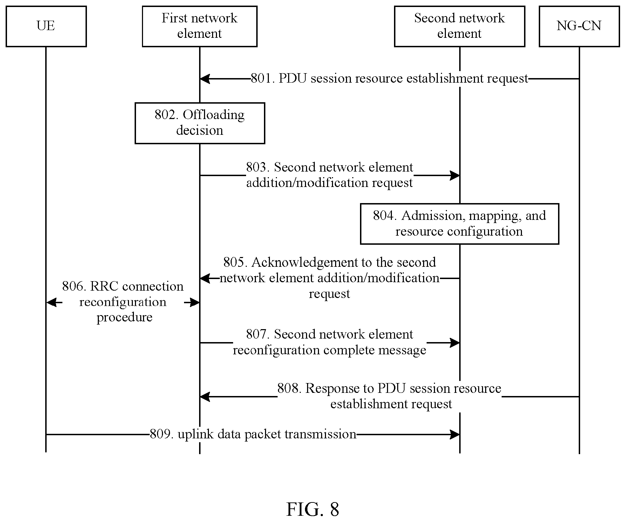

As shown in FIG. 8, an implementation process of the present embodiment may include steps described below.

In step 801, the UE accesses the first network element and is in a Radio Resource Control Connected (RRC_Connected) state, the first network element receives a first control plane message (that is, a PDU session resource establishment request) from the NG-CN via the NG-C interface, and the first control plane message indicates that the network needs to establish a new PDU session for the UE.

Here, the first control plane message includes at least information of the PDU session and related information of QFs in the PDU session. The information of the PDU session includes at least an identity of the PDU session; an aggregated maximum bit rate and a transport layer address and a tunnel port address allocated by the NG-CN for the PDU session. The information related to the QFs may include at least identities of the QFs and a QoS profile.

In step 802, the first network element makes an offloading decision.

Specifically, the first network element performs radio resource management according to information carried by the first control plane message and other obtained information (such as a measurement report result, load information, and the like), and if the first network element determines that the PDU session needs to be offloaded (that is, a DC mode is applied), the first network element proceeds to execute an offloading decision.

Here, the offloading decision may include at least an offloading granularity, an offloading object, and an offloading bear type.

The offloading granularity includes, but not limited to, one of the following:
a) offloading all of QFs in the PDU session to a second network element completely;
b) offloading part of QFs in the PDU session to the second network element; and
c) offloading part of data packets in all or part of QFs in the PDU session to the second network element.

When b or c is selected as the offloading granularity, the offloading object refers to the offloaded part of QFs in the PDU session. When a is selected as the offloading granularity, the offloading object refers to all QFs in the PDU session.

The offloading bear type may include: an SCG bearer, an SCG split bearer, an MCG split bearer, and the like. In practical applications, when a or b is selected as the offloading granularity, the offloading bear type may be the SCG bearer and/or the SCG split bearer; when c is selected as the offloading granularity, the offloading bear type may be the MCG split bearer.

In the present embodiment, a or b is selected as the offloading granularity, the corresponding offloading bear type is the SCG bearer and/or the SCG split bearer, and the offloading object is offloaded part of QFs in the PDU session or all QFs in the PDU session.

In step 803, the first network element sends a third control plane message (such as a second network element addition request, a second network element modification request, and the like) to the second network element through the Xn interface according to the offloading decision, where the third control plane message is used for requesting the second network element to admit the offloading resource. The third control plane message may occur in a second network element addition procedure (that is, corresponding to the second network element addition request information), or in a second network element modification procedure (that is, corresponding to the second network element modification request information).

The third control plane message carries the offloading resource information, and the offloading resource information includes at least offloading object information and offloading bear type information. In the present embodiment, a or b is selected as the offloading granularity, the corresponding offloading bear type is the SCG bearer and/or the SCG split bearer, and the offloading object is the offloaded part of QFs in the PDU session or all QFs in the PDU session. At this time, the offloading object information in the offloading resource information includes QF IDs of all or part of QFs offloaded to the second network element and QoS profiles thereof. The offloading bear type information includes information indicating that the current offloading bearer is the SCG bearer and/or the SCG split bearer.

If a is selected as the offloading granularity, the offloading resource information may further include information of the PDU session in step 801. If b is selected as the offloading granularity, the offloading resource information may further include the transport layer address and tunnel port address information of the QFs allocated at the NG-U interface. In the two options, the offloading resource information may further include a first indication and security-related information. The first indication is used for notifying the second network element to establish a default data radio bearer, and the security-related information may include: a key derived by the first network element for the safety of the radio resources on the second network element side. It is to be noted that in practical applications, when b is selected as the offloading granularity, whether the first network element side establishes a default data radio bearer is optional, but a default data radio bearer is established on at least one of the first network element side or the second network element side.

If the offloading bear type is selected to be the SCG split bearer, the offloading resource information may further include radio resource traffic information provided by the first network element for offloading QFs. The radio resource traffic information may be represented as a traffic bit value or a proportion value of the divided by the first network element for DC, or total traffic value information of the UE.

In step 804, the second network element performs admission, mapping and resource configuration;

Specifically, after receiving the third control plane message, the second network element first determines whether to admit the flows according to offloading resource information carried by the third control plane message. In practical applications, the second network element may admit part or all of QFs indicated by the offloading object information in the offloading resource information. As long as the radio resource condition of the second network element can satisfy the request of at least one QF, the second network element allows admission; otherwise, the second network element does not allow admission.

For the offloading resources the second network element decides to admit, the second network element performs radio resource configuration and obtains corresponding SCG radio resource configuration information. The SCG radio resource configuration information includes at least mapping relationship information between the QF and the SCG bearer and/or the SCG split bearer, protocol stack configuration information of the SCG bearer and/or the SCG split bearer in the L2 and physical layer of the second network element, and transport layer address and port address information of an NG-U data transmission tunnel allocated to the QF by the second network element.

If the offloading resource information of the third control plane message includes a first indication and the first indication indicates that the second network element needs to establish a default data radio bearer for the PDU session, the second network element needs to identify, in the SCG radio resource configuration information, which SCG bearer or SCG split bearer is the default data radio bearer. That is, the SCG radio resource configuration information may further include an identifier for indicating which offloading bearer is the default data radio bearer.

For the SCG split bearer, the second network element needs to make a traffic dividing not exceeding the radio resource traffic information indicated in the third control plane message, and the result of the traffic dividing is included in the SCG radio resource configuration information. It is to be noted that, for the SCG bearer, the time for the second network element to establish each SCG bearer on the radio interface is determined by the second network element. If the SCG bearer is not established in the current process, the radio protocol stack configuration information of the SCG bearer may not be included in the SCG radio resource configuration information.

In step 805, the second network element replies a response message (such as a second network element addition request acknowledgement message or a second network element modification request acknowledgement message) for the third control plane message to the first network element, where the response message includes the SCG radio resource configuration information.

Optionally, the response message may further include an identity of the QF rejected by the second network element.

In step 806, an RRC connection reconfiguration procedure is performed between the first network element and the UE;

The first network element performs radio resource configuration for the SCG split bearer configured by the second network element according to the information carried by the response message, the SCG split bearer configured by the second network element, the mapping relationship between the admitted QF and the SCG split bearer, the QoS profile of the QF of each SCG split bearer, and the traffic dividing result indicated by the second network element, and obtains corresponding MCG radio resource configuration information.

The first network element also needs to allocate a port address of a tunnel for transmitting offloading data on the Xn interface for each SCG split bearer.

For the QF that is not admitted by the second network element, the first network element needs to decide an operation for the QF, and the operation includes but is not limited to releasing the QF.

The first network element combines the MCG radio resource configuration information (if any) and the SCG radio resource configuration information, generates RRC control plane request signaling (such as RRC Connection Reconfiguration), and sends the RRC control plane request signaling to the UE through a radio interface between the first network element and the UE. If the resource configuration indicated by the RRC control plane signaling is successfully configured by the UE, the UE replies corresponding RRC control plane acknowledgement signaling (that is, RRC Connection Reconfiguration Complete).

In step 807, after receiving the RRC control plane acknowledgement signaling replied by the UE, the first network element sends an Xn interface message (that is, a second network element reconfiguration complete message) to the second network element, where the Xn interface information is used for indicating to the second network element that the UE successfully applies the SCG radio resource configuration information.

The Xn interface message may further include port address information of a tunnel allocated by the first network element for each SCG split bearer at the Xn interface.

Optionally, the address information of the tunnel may also be carried by a new Xn interface message, and after receiving the response message from the second network element, the first network element sends the new Xn interface message to the second network element.

In step 808, the first network element sends a response message (such as a PDU session resource establishment request response) to the NG-CN for the first control plane message, where the response message includes at least address information and port information of NG-U data transmission allocated by the NG-RAN for the admitted QFs, and the identities of the rejected QFs (if any).

In step 809, uplink data packet transmission is performed between the UE and the second network element.

For the PDU session, if the UE needs to transmit an uplink data packet and the uplink data packet does not have any indication information for indicating which bearer the uplink data packet corresponds to, if a default data radio bearer is established on only one of the first network element side and the second network element side for the PDU session, the UE maps the uplink data packet on the default data radio bearer for transmission. If both the first network element and the second network element establish the default data radio bearers for the PDU session, the UE may map the uplink data packet on the corresponding default data radio bearer for transmission according to radio resource configuration information (that is, whether the uplink data packet belongs to the offloading object) indicated by the first network element.

### Example two

The first network element performs radio resource management in the process of providing communication service for the UE. The first network element determines to cooperate with the second network element to configure an architecture in which the user plane bearer mode is the MCG split bearing, and provides DC communication service for the UE.

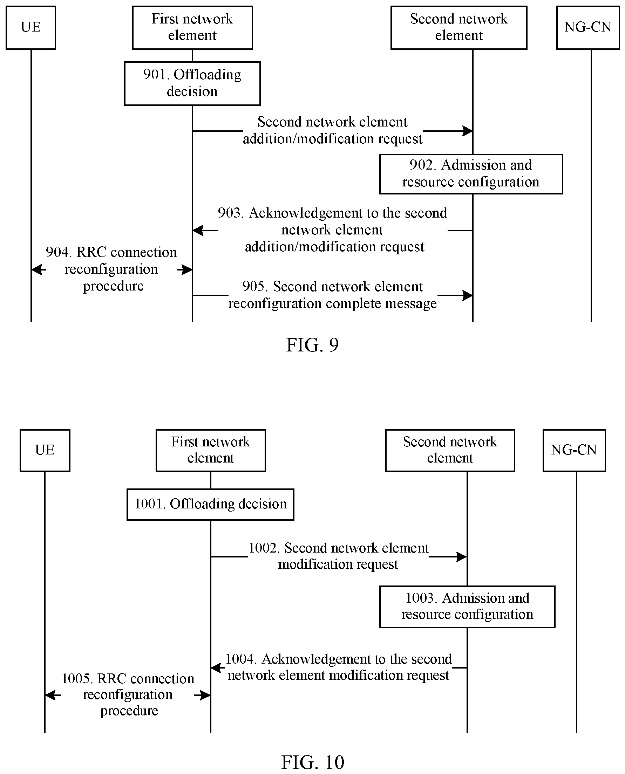

As shown in FIG. 9, an implementation process of the present embodiment may include steps described below.

In step 901, for the UE in RRC_Connected, the first network element performs an offloading decision, and sends a first control plane message to the second network element through the Xn interface to request the second network element to provide radio resources for the indicated MCG split bearer, where the first control plane message carries offloading resource information;

On the NG-C interface, the first control plane message may occur during the establishment of the PDU session (that is, similar to step 801 and step 802 in example one, only the offloading bear type is selected to be the MCG split bearer), or during the modification of the PDU session (for example, the NG-CN adds a new QF for the PDU session), or when no change occurs on the NG-C interface. On the Xn-C interface, the first control plane message may occur in the second network element addition procedure or in the second network element modification procedure (for example, before step 901, the first network element and the second network element have collaboratively established at least one MCG split bearer for the UE).

The offloading resource information carried by the first control plane message may include: offloading object information and offloading bear type information. Since the MCG split bearer needs to be configured currently, the offloading bear type information includes information indicating MCG split bearer. The offloading object information may include QF IDs of QFs in the MCG split bearer and QoS Profile information thereof and the radio resource traffic information allocated by the first network element for the MCG split bearer. In addition, the offloading resource information further includes: radio protocol stack configuration information made by the first network element for the MCG split bearer which needs to be configured currently on a first network element side, and tunnel port address information allocated by the first network element for the MCG split bearer on the Xn-U interface (if the uplink split is supported).

In step 902, the second network element performs admission and resource configuration;

According to the offloading resource information carried by the first control plane message, the second network element firstly performs admission decision according to the radio resource requested by the first network element. If the second network element can accept the addition of at least one MCG split bearer, the second network element determines to accept the request of the first control plane message; otherwise, rejects the request.

For the MCG split bearer whose admission decision result is admission, the second network element performs radio resource configuration and obtains corresponding MCG radio resource configuration information. The MCG radio resource configuration information includes at least protocol stack configuration information of the MCG split bearer in the L2 (that is, an RLC sublayer and an MAC sublayer) and a physical layer on the second network element side, and the tunnel port address information allocated for the MCG split bearer on an Xn-U interface by the second network element.

In step 903, the second network element includes the MCG radio resource configuration information in a response message with respect to the first control plane message (that is, a second network element addition request acknowledgement message or a second network element modification request acknowledgement message) and replies the response message to the first network element through an Xn interface. Optionally, the response message may further include an identity of the MCG split bearer rejected by the second network element.

In step 904, an RRC connection reconfiguration procedure is performed between the first network element and the UE.

The first network element can perform necessary radio resource configuration according to the MCG radio resource configuration information carried by the response message. The radio resource configuration includes the operations of adjusting the radio protocol stack configuration of the accepted MCG split bearer on the first network element side, obtaining the corresponding MCG radio resource configuration information and/or the MCG split bearer rejected by the second network element. The operation includes but is not limited to configuring the MCG split bearer to be an MCG bearer and obtaining corresponding MCG radio resource configuration information, or releasing the MCG split bearer (at this time, indicating a QF identity in the MCG split bearer to the NG-CN).

In this step, the first network element may combine the current MCG radio resource configuration information with the SCG radio resource configuration information previously obtained from the second network element, generate RRC control plane request signaling, and send the RRC control-plane request signaling to the UE through the radio interface. If the UE successfully configures the resources indicated by the RRC control plane request signaling, the UE replies corresponding RRC control plane acknowledgement signaling to the first network element.

In step 905, after the first network element receives the RRC control plane acknowledgement signaling sent by the UE, the first network element sends an Xn interface message (for example, a second network element reconfiguration complete message) to the second network element, where the Xn interface message is used for indicating to the second network element that the UE successfully applies the SCG radio resource configuration information.

In the present embodiment, the default data radio bearer, which may be an MCG bearer or an MCG split bearer, is established only on the first network element side. Therefore, if the UE needs to transmit an uplink data packet, and there is no indication information for indicating which bearer the uplink data packet corresponds to, the UE maps the uplink data packet on a default data radio bearer established on the radio interface between the UE and the first network element for transmission.

### Example three

In a DC system, a first network element performs a primary radio resource management, which includes a user plane bearer type used in the DC system. For example, the first network element may decide to change the type of a certain bearer.

As shown in FIG. 10, an implementation process of the present embodiment may include steps described below.

In step 1001, the first network element performs an offloading decision and makes a decision of changing a user plane bearer type.

After PDU session establishment (please refer to the example one), the DC system may have a user plane mode in which a part of QFs is mapped on one MCG bearer and another part of QFs is mapped on one SCG bearer. The first network element may make a decision of changing the user plane bearer type according to the varying radio resource condition of the network and/or the request of the second network element, and the decision may include but is not limited to: changing the MCG bearer to the SCG bearer (or vice versa), or changing the MCG bearer to the SCG split bearer (or vice versa), or changing the SCG bearer to the SCG split bearer (or vice versa).

The bearer type change may further relate to specifically targeted QFs. For example, when the MCG bearer is changed to the SCG bearer, the following are involved: whether all QFs in the MCG bearer are offloaded to the second network element and mapped to at least one SCG bearer or only part of QFs in the MCG bearer are offloaded to the second network element and mapped to at least one SCG bearer (while another part of QFs remains in the MCG bearer). That is, the decision of changing the user plane bearer type made by the first network element needs to include a specific offloading object.

In step 1002, according to the decision of changing the user plane bearer type obtained by the radio resource management decision, the first network element sends a second control plane message to the second network element through the Xn interface, where the second control plane message may be a second network element modification request message, and is used for requesting the second network element to admit the offloading resources indicated by the offloading resource information.

The second control plane message may include at least the offloading resource information, where the offloading resource information may include at least the offloading object information (for example, the QF ID and QoS profile thereof), and bearer type information (for example, SCG bearer type).

Alternatively, the offloading resource information may further include a mapping relationship between the MCG bearer and the offloading object on the first network element side, and radio resource configuration information of the MCG bearer on the first network element side, where the part of content may be used as a reference for radio resource mapping and configuration by the second network element.

Further, the offloading resource information may further include: PDU session information to which the offloading object belongs, transport layer address and tunnel port address information allocated to the offloading object on the NG-U interface, and security related information such as a key derived by the first network element for radio resource security of the second network element side. If the first network element suggests to changing the bearer for DL Data Forwarding, the offloading resource information may further include a second indication, where the second indication is used for suggesting the second network element to perform DL Forwarding on the forwarded data packets from the first network element.

Further, the offloading resource information needs to further include a first indication, where the first indication is used for notifying a second network element to establish a default data radio bearer. The situation that the second network element needs to establish a default data radio bearer may be applicable to a scenario that the first network element determines to change the default data radio bearer originally established on the first network element side to be established on the second network element side, or may be applicable to a scenario that the first network element determines that each of the network element sides needs to establish the default data radio bearer.

In step 1003, according to the information indicated in the second control plane message, the second network element first determines whether there are enough radio resources to accept the request of at least one offloading object. If the radio resources are sufficient to accept the request of at least one offloading object, the second network element determines the mapping relationship of the accepted offloading object, performs radio resource configuration, and obtains corresponding SCG radio resource configuration information.

The SCG radio resource configuration information includes at least mapping relationship information between the offloading object and the SCG bearer (which includes but is not limited to adding the offloading object to an originally established SCG bearer, and/or establishing at least one SCG bearer for the offloading object, and a mapping relationship between the newly established SCG bearer and the offloading object), protocol stack configuration information of L2 and a physical layer on the second network element side for the SCG bearer, and transport layer address and port address information of an NG-U data transmission tunnel allocated by the second network element for the offloading object.

Alternatively, if the downlink data forwarding suggested by the first network element is accepted, the SCG radio resource configuration information further needs to include tunnel port address information of an Xn-U forwarding tunnel allocated by the second network element for accepting the forwarding data packets.

If the second control plane message indicates that the second network element needs to establish a default data radio bearer for the PDU session, the second network element needs to identify, in the SCG radio resource configuration information, which SCG bearer is the default data radio bearer. That is, the SCG radio resource configuration information includes a default indication for identifying the default data radio bearer.

In step 1004, the second network element replies a response message (such as a second network element modification request acknowledgment message) for the second control plane message to the first network element, where the response message includes the SCG radio resource configuration information.

Alternatively, the method may further include an identity (QF ID) of the offloading object rejected by the second network element.

In step 1005, an RRC connection reconfiguration procedure is performed between the first network element and the UE;
Specifically, after receiving the response message, the first network element performs control plane and user plane operations. These operations are similar to those in example one, the difference is that the present embodiment does not include the configuration of the SCG split bearer, and the principles are the same and are not described again.

The present application further provides a computer-readable storage medium, which stores a configuration program. The configuration program, when executed by a processor, performs the steps of the method for configuring a new quality of service architecture in a dual-connectivity system which is described in the embodiment one.

The present application further provides a computer-readable storage medium, which stored a configuration program. The configuration program, when executed by a processor, performs the steps of the method for configuring a new quality of service architecture in a dual-connectivity system which is described in the embodiment four.

Additionally, embodiments of the present application further provide a computer-readable storage medium configured to store computer-executable instructions. The computer-executable instructions, when executed, perform one of the configuration methods described above.

Additionally, embodiments of the present application further provide a computer-readable storage medium configured to store computer-executable instructions. The computer-executable instructions, when executed, perform another configuration method described above.

Alternatively, in the present embodiment, the storage medium may include, but is not limited to, a USB flash disk, a read-only memory (ROM), a random access memory (RAM), a mobile hard disk, a magnetic disk, an optical disk or another medium capable of storing program codes.

Alternatively, in the present embodiment, a processor performs the steps of the methods in the embodiments described above according to program codes stored in a storage medium.

Alternatively, for specific examples in the present embodiment, reference may be made to the examples described in the above-mentioned embodiments and optional implementation modes, and repetition will not be made in the present embodiment.

It should be understood by those skilled in the art that all or some steps in the methods described above may be performed by relevant hardware (such as a processor) as instructed by programs, and the programs may be stored in a computer-readable storage medium, such as a ROM, a magnetic disk, or an optical disk. Optionally, all or some steps in the embodiments described above may also be performed by using one or more integrated circuits. Accordingly, the modules/units in the embodiments described above may be performed by hardware. For example, the functions of these modules/units may be performed by integrated circuits. Optionally, these modules/units may be performed by software function modules. For example, the functions of these modules/units may be performed by using a processor to perform program/instructions stored in a memory. The present application is not limited to any specific combination of hardware and software.

The above illustrate and describe the basic principles, main features and advantages of the present application. The present application is not limited to the embodiments described above. The above-mentioned embodiments and the specification describe only the principles of the present application. Various modifications and improvements may be made in the present application without departing from the scope of the present application. These modifications and improvements are within the scope of the present application.

### INDUSTRIAL APPLICABILITY

With the embodiments of the present application, two network elements (such as service base stations) can effectively and reasonably configure the user plane bearer for the UE, the establishment of the user plane bearer of the dual-connectivity system under a new QoS architecture is achieved, and the data transmission can be performed, so that the uplink and downlink data can be efficiently and correctly transmitted via a radio interface and a wired interface, the transmission performance requirement of the user plane data in a 5G system is met, and the user experience is improved.

## Claims

1. A method for configuring a new quality of service, QoS, architecture in a dual-connectivity system, the method comprising:
making (401), by a first network element, an offloading decision in response to needing to offload a Protocol Data Unit, PDU, session of a User Equipment, LTE, wherein the offloading decision comprises at least an offloading granularity, an offloading object, and an offloading bearer type; and
sending (402), by the first network element, a control plane message to a second network element according to the offloading decision, wherein the control plane message is used for requesting the second network element to perform an admission decision and resource configuration of offloading resources, and the control plane message carries offloading resource information, wherein the offloading resource information comprises: offloading object information and offloading bearer type information,
wherein the offloading granularity comprises one of the following:
offloading all of quality of service flows, QFs, in the PDU session to the second network element;
offloading part of the QFs in the PDU session to the second network element; or
offloading part of data packets in all or part of the QFs in the PDU session to the second network element,
wherein the offloading object is one of the following:
all of QFs in the PDU session;
part of the QFs in the PDU session; or
part of data packets in all or part of the QFs in the PDU session,
wherein the offloading bearer type comprises one or any combination of the following:
a secondary cell group, SCG, bearer;
an SCG split bearer; or
a master cell group, MCG, split bearer.

2. The method of claim 1, wherein the offloading object information comprises at least: a QF identity, ID, of a QF offloaded to the second network element and a QoS profile corresponding to the QF ID.

3. The method of claim 1, wherein in response to the offloading granularity being offloading all of the QFs in the PDU session to the second network element, the offloading resource information further comprises one or a combination of the following:
information of the PDU session; or
access stratum security related information,
wherein the information of the PDU session comprises at least one or a combination of the following:
an identity of the PDU session;
an aggregate maximum bit rate of the PDU session; or
a transport layer address and a tunnel port address allocated by a next generation Core Network, NG-CN, for the PDU session.

4. The method of claim 1, wherein in response to the offloading granularity being offloading part of the data packets in all or part of the QFs in the PDU session to the second network element, the offloading resource information further comprises one or a combination of the following:
configuration information of a radio protocol stack of an offloading bearer on a first network element side; or
mapping relationship information between the offloading bearer on the first network element side and a corresponding QF.

5. The method of claim 4, wherein in response to the offloading bearer supporting an uplink split, the offloading resource information comprises information of a tunnel port address allocated by the first network element for the offloading bearer at an Xn-U interface.

6. A device for configuring a new quality of service, QoS, architecture in a dual-connectivity system, the device comprising:
a decision module (51), configured to make an offloading decision in response to needing to offload a Protocol Data Unit, PDU, session of a User Equipment, LTE, wherein the offloading decision comprises at least an offloading granularity, an offloading object, and an offloading bear type; and
a first sending module (52), configured to send a control plane message to a second network element according to the offloading decision, wherein the control plane message is used for requesting the second network element to perform an admission decision and resource configuration of offloading resources, and the control plane message carries offloading resource information, wherein the offloading resource information comprises: offloading object information and offloading bear type information,
wherein the offloading granularity comprises one of the following:
offloading all of quality of service flows, QFs, in the PDU session to the second network element;
offloading part of the QFs in the PDU session to the second network element; or
offloading part of data packets in all or part of the QFs in the PDU session to the second network element,
wherein the offloading object is one of the following:
all of QFs in the PDU session;
part of the QFs in the PDU session; or
part of data packets in all or part of the QFs in the PDU session,
wherein the offloading bearer type comprises one or any combination of the following:
a secondary cell group, SCG, bearer;
an SCG split bearer; or
a master cell group, MCG, split bearer.

7. A method for configuring a new quality of service, QoS, architecture in a dual-connectivity system, the method comprising:
receiving (601), by a second network element, a control plane message from a first network element, wherein the control plane message carries offloading resource information;
performing (602), by the second network element, an admission decision of offloading resources according to the offloading resource information carried by the control plane message; and
in response to a result of the admission decision being admission, performing (603), by the second network element, radio resource configuration for admitted offloading resources and obtaining corresponding radio resource configuration information,
wherein the offloading resource information comprises: offloading object information and offloading bearer type information,
wherein an offloading object in the offloading object information is one of the following:
all of QFs in the PDU session;
part of the QFs in the PDU session; or
part of data packets in all or part of the QFs in the PDU session,
wherein an offloading bearer type in the offloading bearer type information comprises one or any combination of the following:
a secondary cell group, SCG, bearer;
an SCG split bearer; or
a master cell group, MCG, split bearer.

8. The method of claim 7, wherein in response to an offloading object being all of quality of service flows, QFs, in a Protocol Data Unit, PDU, session or part of the QFs in the PDU session, the radio resource configuration information comprises at least:
mapping relationship information between the offloading object and an offloading bearer;
configuration information of a radio protocol stack of the offloading bearer on the second network element side; and
information of a transport layer address and a tunnel port address allocated for the offloading object at a next generation user plane, NG-U interface.

9. The method of claim 7, wherein in response to the offloading bearer being a secondary cell group, SCG, split bearer, the radio resource configuration information comprises division result information of radio resource traffic;
in response to the SCG split bearer supporting an uplink split, the radio resource configuration information comprises information of a tunnel port address allocated by the second network element for the SGG split bearer at an Xn-U interface.

10. The method of claim 7, wherein in response to an offloading object is part of data packets in all or part of QFs in a PDU session, the radio resource configuration information comprises at least:
configuration information of a radio protocol stack of an offloading bearer on a second network element side; and
information of a tunnel port address allocated for the offloading bearer by the second network element at an Xn-U interface.

11. The method of claim 7, wherein in response to the offloading resource information comprising a second indication, the method further comprises:
determining to accept a forwarded data packet suggested in the second indication, and the radio resource configuration information comprising information of a tunnel port address allocated at an Xn-U interface by the second network element for receiving the forwarded data packet.

12. A device for configuring a new quality of service, QoS, architecture in a dual-connectivity system, the device comprising:
a third receiving module (71), configured to receive a control plane message from a first network element, wherein the control plane message carries offloading resource information;
an admission decision module (72), configured to perform, by a second network element, an admission decision of offloading resources according to the offloading resource information carried by the control plane message; and
a resource configuration module (73), configured to perform, by the second network element, in response to a result of the admission decision being admission, radio resource configuration for admitted offloading resources and obtain corresponding radio resource configuration information,
wherein the offloading resource information comprises: offloading object information and offloading bearer type information,
wherein an offloading object in the offloading object information is one of the following:
all of QFs in the PDU session;
part of the QFs in the PDU session; or
part of data packets in all or part of the QFs in the PDU session,
wherein an offloading bearer type in the offloading bearer type information comprises one or any combination of the following:
a secondary cell group, SCG, bearer;
an SCG split bearer; or
a master cell group, MCG, split bearer.

## Patentansprüche

1. Verfahren zum Konfigurieren einer neuen Dienstqualitäts(Quality of Service - QoS)-Architektur in einem Dualkonnektivitätssystem, wobei das Verfahren Folgendes umfasst:
Treffen (401) einer Auslagerungsentscheidung durch ein erstes Netzwerkelement als Reaktion auf die Notwendigkeit, eine Sitzung einer Protokolldateneinheit (Protocol Data Unit - PDU) eines Benutzergeräts (User Equipment - UE) auszulagern, wobei die Auslagerungsentscheidung mindestens eine Auslagerungsgranularität, ein Auslagerungsobjekt und einen Auslagerungsträgertyp umfasst; und
Senden (402) einer Steuerebenennachricht durch das erste Netzwerkelement an ein zweites Netzwerkelement gemäß der Auslagerungsentscheidung, wobei die Steuerebenennachricht zum Auffordern des zweiten Netzwerkelements verwendet wird, eine Zulassungsentscheidungs- und Ressourcenkonfiguration von Auslagerungsressourcen durchzuführen, und die Steuerebenennachricht Auslagerungsressourceninformationen enthält, wobei die Auslagerungsressourceninformationen Folgendes umfassen: Auslagerungsobjektinformationen und Auslagerungsträgertypinformationen,
wobei die Auslagerungsgranularität eines der Folgenden umfasst:
Auslagern aller Dienstqualitätsströme (Quality of Service flows - QFs) in der PDU-Sitzung auf das zweite Netzwerkelement;
Auslagern eines Teils der QFs in der PDU-Sitzung auf das zweite Netzwerkelement; oder
Auslagern eines Teils von Datenpaketen in allen oder einem Teil der QFs in der PDU-Sitzung auf das zweite Netzwerkelement,
wobei das Auslagerungsobjekt eines der Folgenden ist:
alle der QFs in der PDU-Sitzung;
ein Teil der QFs in der PDU-Sitzung; oder
ein Teil von Datenpaketen in allen oder einem Teil der QFs in der PDU-Sitzung,
wobei der Auslagerungsträgertyp eines oder eine beliebige Kombination der Folgenden umfasst:
einen Träger einer sekundären Zellengruppe (secondary cell group - SCG);
einen geteilten SCG-Träger; oder
einen geteilten Träger einer Master-Zellengruppe (master cell group - MCG).

2. Verfahren nach Anspruch 1, wobei die Auslagerungsobjektinformationen mindestens Folgendes umfassen: eine QF-Identität (ID) eines auf das zweite Netzwerkelement ausgelagerten QF und ein QoS-Profil, das der QF-ID entspricht.

3. Verfahren nach Anspruch 1, wobei die Auslagerungsressourceninformationen als Reaktion darauf, dass die Auslagerungsgranularität alle der QFs in der PDU-Sitzung auf das zweite Netzwerkelement auslagert, ferner eines oder eine Kombination der Folgenden umfassen:
Informationen über die PDU-Sitzung; oder
sicherheitsrelevante Informationen über die Zugangsschicht,
wobei die Informationen über die PDU-Sitzung mindestens eines oder eine Kombination der Folgenden umfassen:
eine Identität der PDU-Sitzung;
eine aggregierte maximale Bitrate der PDU-Sitzung; oder
eine Transportschichtadresse und eine Tunnelportadresse, die durch ein Kernnetzwerk der nächsten Generation (next generation Core Network - NG-CN) für die PDU-Sitzung zugewiesen werden.

4. Verfahren nach Anspruch 1, wobei die Auslagerungsressourceninformationen als Reaktion darauf, dass die Auslagerungsgranularität einen Teil der Datenpakete in allen oder einem Teil der QFs in der PDU-Sitzung auf das zweite Netzwerkelement auslagert, ferner eines oder eine Kombination der Folgenden umfassen:
Konfigurationsinformationen eines Funkprotokollstapels eines Auslagerungsträgers auf einer Seite des ersten Netzwerkelements; oder
Zuordnungsbeziehungsinformationen zwischen dem Auslagerungsträger auf der Seite des ersten Netzwerkelements und einem entsprechenden QF.

5. Verfahren nach Anspruch 4, wobei die Auslagerungsressourceninformationen als Reaktion darauf, dass der Auslagerungsträger eine Uplink-Aufteilung unterstützt, Informationen über eine Tunnelportadresse umfassen, die durch das erste Netzwerkelement für den Auslagerungsträger an einer Xn-U-Schnittstelle zugewiesen wird.

6. Vorrichtung zum Konfigurieren einer neuen Dienstqualitäts(QoS)-Architektur in einem Dualkonnektivitätssystem, wobei das Vorrichtung Folgendes umfasst:
ein Entscheidungsmodul (51), das dazu konfiguriert ist, eine Auslagerungsentscheidung als Reaktion auf die Notwendigkeit, eine Sitzung einer Protokolldateneinheit (PDU) eines Benutzergeräts (UE) auszulagern, zu treffen, wobei die Auslagerungsentscheidung mindestens eine Auslagerungsgranularität, ein Auslagerungsobjekt und einen Auslagerungsträgertyp umfasst; und
ein erstes Sendemodul (52), das dazu konfiguriert ist, eine Steuerebenennachricht an ein zweites Netzwerkelement gemäß der Auslagerungsentscheidung zu senden, wobei die Steuerebenennachricht zum Auffordern des zweiten Netzwerkelements verwendet wird, eine Zulassungsentscheidungs- und Ressourcenkonfiguration von Auslagerungsressourcen durchzuführen, und die Steuerebenennachricht Auslagerungsressourceninformationen enthält, wobei die Auslagerungsressourceninformationen Folgendes umfassen:
Auslagerungsobjektinformationen und Auslagerungsträgertypinformationen,
wobei die Auslagerungsgranularität eines der Folgenden umfasst:
Auslagern aller Dienstqualitätsströme (QFs) in der PDU-Sitzung auf das zweite Netzwerkelement;
Auslagern eines Teils der QFs in der PDU-Sitzung auf das zweite Netzwerkelement; oder
Auslagern eines Teils von Datenpaketen in allen oder einem Teil der QFs in der PDU-Sitzung auf das zweite Netzwerkelement,
wobei das Auslagerungsobjekt eines der Folgenden ist:
alle der QFs in der PDU-Sitzung;
ein Teil der QFs in der PDU-Sitzung; oder
ein Teil von Datenpaketen in allen oder einem Teil der QFs in der PDU-Sitzung,
wobei der Auslagerungsträgertyp eines oder eine beliebige Kombination der Folgenden umfasst:
einen Träger einer sekundären Zellengruppe (SCG);
einen geteilten SCG-Träger; oder
einen geteilten Träger einer Master-Zellengruppe (MCG).

7. Verfahren zum Konfigurieren einer neuen Dienstqualitäts(QoS)-Architektur in einem Dualkonnektivitätssystem, wobei das Verfahren Folgendes umfasst:
Empfangen (601) einer Steuerebenennachricht von einem ersten Netzwerkelement durch ein zweites Netzwerkelement, wobei die Steuerebenennachricht Auslagerungsressourceninformationen enthält;
Durchführen (602) einer Zulassungsentscheidung zum Auslagern von Ressourcen durch das zweite Netzwerkelement gemäß den Auslagerungsressourceninformationen, die in der Steuerebenennachricht enthalten sind; und
als Reaktion darauf, dass ein Ergebnis der Zulassungsentscheidung eine Zulassung ist, Durchführen (603) einer Funkressourcenkonfiguration für zugelassene Auslagerungsressourcen durch das zweite Netzwerkelement und
Erlangen entsprechender Funkressourcenkonfigurationsinformationen,
wobei die Auslagerungsressourceninformationen Folgendes umfassen: Auslagerungsobjektinformationen und Auslagerungsträgertypinformationen,
wobei ein Auslagerungsobjekt in den Auslagerungsobjektinformationen eines der Folgenden ist:
alle der QFs in der PDU-Sitzung;
ein Teil der QFs in der PDU-Sitzung; oder
ein Teil von Datenpaketen in allen oder einem Teil der QFs in der PDU-Sitzung,
wobei ein Auslagerungsträgertyp in den Auslagerungsträgertypinformationen eines oder eine beliebige Kombination der Folgenden umfasst:
einen Träger einer sekundären Zellengruppe (SCG);
einen geteilten SCG-Träger; oder
einen geteilten Träger einer Master-Zellengruppe (MCG).

8. Verfahren nach Anspruch 7, wobei die Funkressourcenkonfigurationsinformationen als Reaktion darauf, dass es sich bei einem Auslagerungsobjekt um alle Dienstqualitätsströme (QFs) in einer Sitzung einer Protokolldateneinheit (PDU) oder einen Teil der QFs in der PDU-Sitzung handelt, mindestens Folgendes umfassen:
Zuordnungsbeziehungsinformationen zwischen dem Auslagerungsobjekt und einem Auslagerungsträger;
Konfigurationsinformationen eines Funkprotokollstapels des Auslagerungsträgers auf der Seite des zweiten Netzwerkelements; und
Informationen über eine Transportschichtadresse und eine Tunnelportadresse, die für das Auslagerungsobjekt an einer Schnittstelle einer Benutzerebene der nächsten Generation, (next generation user plane - NG-U) zugewiesen werden.

9. Verfahren nach Anspruch 7, wobei die Funkressourcenkonfigurationsinformationen als Reaktion darauf, dass es sich bei dem Auslagerungsträger um einen geteilten Träger einer sekundären Zellengruppe (SCG) handelt, Teilungsergebnisinformationen des Funkressourcenverkehrs umfassen;
wobei die Funkressourcenkonfigurationsinformationen als Reaktion darauf, dass der geteilte SCG-Träger eine Uplink-Aufteilung unterstützt, Informationen über eine Tunnelportadresse umfassen, die durch das zweite Netzwerkelement für den geteilten SGG-Träger an einer Xn-U-Schnittstelle zugewiesen wird.

10. Verfahren nach Anspruch 7, wobei die Funkressourcenkonfigurationsinformationen als Reaktion darauf, dass es sich bei einem Auslagerungsobjekt um einen Teil von Datenpaketen in allen oder einem Teil der QFs in einer PDU-Sitzung handelt, mindestens Folgendes umfassen:
Konfigurationsinformationen eines Funkprotokollstapels eines Auslagerungsträgers auf einer Seite des zweiten Netzwerkelements; und
Informationen über eine Tunnelportadresse, die durch das zweite Netzwerkelement für den Auslagerungsträger an einer Xn-U-Schnittstelle zugewiesen wird.

11. Verfahren nach Anspruch 7, wobei das Verfahren als Reaktion darauf, dass die Auslagerungsressourceninformationen eine zweiten Angabe umfassen, ferner Folgendes umfasst:
Bestimmen, ein in der zweiten Angabe vorgeschlagenes weitergeleitetes Datenpaket zu akzeptieren, und wobei die Funkressourcenkonfigurationsinformationen Informationen über eine Tunnelportadresse umfassen, die an einer Xn-U-Schnittstelle durch das zweite Netzwerkelement zum Empfangen des weitergeleiteten Datenpakets zugewiesen wird.

12. Vorrichtung zum Konfigurieren einer neuen Dienstqualitäts(QoS)-Architektur in einem Dualkonnektivitätssystem, wobei die Vorrichtung Folgendes umfasst:
ein drittes Empfangsmodul (71), das dazu konfiguriert ist, eine Steuerebenennachricht von einem ersten Netzwerkelement zu empfangen, wobei die Steuerebenennachricht Auslagerungsressourceninformationen enthält;
ein Zulassungsentscheidungsmodul (72), das dazu konfiguriert ist, eine Zulassungsentscheidung zum Auslagern von Ressourcen gemäß den Auslagerungsressourceninformationen, die in der Steuerebenennachricht enthalten sind, durch ein zweites Netzwerkelement durchzuführen; und
ein Ressourcenkonfigurationsmodul (73), das dazu konfiguriert ist, als Reaktion darauf, dass ein Ergebnis der Zulassungsentscheidung eine Zulassung ist, eine Funkressourcenkonfiguration für zugelassene Auslagerungsressourcen durch das zweite Netzwerkelement durchzuführen und entsprechende Funkressourcenkonfigurationsinformationen zu erlangen,
wobei die Auslagerungsressourceninformationen Folgendes umfassen: Auslagerungsobjektinformationen und Auslagerungsträgertypinformationen,
wobei ein Auslagerungsobjekt in den Auslagerungsobjektinformationen eines der Folgenden ist:
alle der QFs in der PDU-Sitzung;
ein Teil der QFs in der PDU-Sitzung; oder
ein Teil von Datenpaketen in allen oder einem Teil der QFs in der PDU-Sitzung,
wobei ein Auslagerungsträgertyp in den Auslagerungsträgertypinformationen eines oder eine beliebige Kombination der Folgenden umfasst:
einen Träger einer sekundären Zellengruppe (SCG);
einen geteilten SCG-Träger; oder
einen geteilten Träger einer Master-Zellengruppe (MCG).

## Revendications

1. Procédé de configuration d'une nouvelle architecture de qualité de service, QoS, dans un système à double connectivité, le procédé comprenant :
la prise (401), par un premier élément de réseau, d'une décision de déchargement en réponse à la nécessité de décharger une session d'unité de données de protocole, PDU, d'un équipement utilisateur, UE, la décision de déchargement comprenant au moins une granularité de déchargement, un objet de déchargement, et un type de porteuse de déchargement ; et
l'envoi (402), par le premier élément de réseau, d'un message de plan de commande à un second élément de réseau conformément à la décision de déchargement, le message de plan de commande étant utilisé pour demander au second élément de réseau de réaliser une décision d'admission et une configuration de ressources de ressources de déchargement, et le message de plan de commande transporte des informations de ressources de déchargement, les informations de ressources de déchargement comprenant : des informations d'objet de déchargement et des informations de type de porteuse de déchargement,
dans lequel la granularité de déchargement comprend l'un de ce qui suit :
le déchargement de tous les flux de qualité de service, QF, dans la session PDU vers le second élément de réseau ;
le déchargement d'une partie des QF dans la session PDU vers le second élément de réseau ; ou
le déchargement d'une partie des paquets de données dans la totalité ou une partie des QF dans la session PDU vers le second élément de réseau,
dans lequel l'objet de déchargement est l'une de ce qui suit :
la totalité des QF dans la session PDU ;
une partie des QF dans la session PDU ; ou
une partie des paquets de données dans la totalité ou une partie des QF dans la session PDU,
dans lequel le type de porteuse de déchargement comprend l'une ou toute combinaison de ce qui suit :
une porteuse de groupe de cellules secondaires, SCG ;
une porteuse divisée de SCG ; ou
une porteuse divisée de groupe de cellules maîtresses, MCG.

2. Procédé selon la revendication 1, dans lequel les informations d'objet de déchargement comprennent au moins : une identité de QF, ID, d'un QF déchargé vers le second élément de réseau et un profil QoS correspondant à l'ID QF.

3. Procédé selon la revendication 1, dans lequel en réponse au fait que la granularité de déchargement consiste à décharger tous les QF dans la session PDU vers le second élément de réseau, les informations de ressources de déchargement comprennent en outre l'une ou une combinaison de ce qui suit :
des informations de la session PDU ; ou
des informations relatives à la sécurité de strate d'accès,
dans lequel les informations de la session PDU comprennent au moins l'un ou une combinaison de ce qui suit :
une identité de la session PDU ;
un débit binaire maximal agrégé de la session PDU ; ou
une adresse de couche de transport et une adresse de port de tunnel attribuées par un réseau central de prochaine génération, NG-CN, à la session PDU.

4. Procédé selon la revendication 1, dans lequel en réponse au fait que la granularité de déchargement consiste à décharger une partie des paquets de données dans la totalité ou une partie des QF de la session PDU vers le second élément de réseau, les informations de ressources de déchargement comprennent en outre l'une ou une combinaison de ce qui suit :
des informations de configuration d'une pile de protocoles radio d'une porteuse de déchargement du côté du premier élément de réseau ; ou
des informations de relation de mise en correspondance entre la porteuse de déchargement du côté du premier élément de réseau et un QF correspondant.

5. Procédé selon la revendication 4, dans lequel en réponse au fait que la porteuse de déchargement prend en charge une division de liaison montante, les informations de ressources de déchargement comprennent des informations d'une adresse de port de tunnel attribuée par le premier élément de réseau à la porteuse de déchargement au niveau d'une interface Xn-U.

6. Dispositif de configuration d'une nouvelle architecture de qualité de service, QoS, dans un système à double connectivité, le dispositif comprenant :
un module de décision (51), configuré pour prendre une décision de déchargement en réponse à la nécessité de décharger une session d'unité de données de protocole, PDU, d'un équipement utilisateur, UE, la décision de déchargement comprenant au moins une granularité de déchargement, un objet de déchargement, et un type de porteuse de déchargement ; et
un premier module d'envoi (52), configuré pour envoyer un message de plan de commande à un second élément de réseau conformément à la décision de déchargement, le message de plan de commande étant utilisé pour demander au second élément de réseau de réaliser une décision d'admission et une configuration de ressource de ressources de déchargement, et le message de plan de commande transporte des informations de ressources de déchargement, les informations de ressources de déchargement comprenant : des informations d'objet de déchargement et des informations de type de porteuse de déchargement,
dans lequel la granularité de déchargement comprend l'un de ce qui suit :
le déchargement de tous les flux de qualité de service, QF, dans la session PDU vers le second élément de réseau ;
le déchargement d'une partie des QF dans la session PDU vers le second élément de réseau ; ou
le déchargement d'une partie des paquets de données dans la totalité ou une partie des QF dans la session PDU vers le second élément de réseau,
dans lequel l'objet de déchargement est l'une de ce qui suit :
la totalité des QF dans la session PDU ;
une partie des QF dans la session PDU ; ou
une partie des paquets de données dans la totalité ou une partie des QF dans la session PDU,
dans lequel le type de porteuse de déchargement comprend l'une ou toute combinaison de ce qui suit :
une porteuse de groupe de cellules secondaires, SCG ;
une porteuse divisée de SCG ; ou
une porteuse divisée de groupe de cellules maîtresses, MCG.

7. Procédé de configuration d'une nouvelle architecture de qualité de service, QoS, dans un système à double connectivité, le procédé comprenant :
la réception (601), par un second élément de réseau, d'un message de plan de commande provenant d'un premier élément de réseau, le message de plan de commande transportant des informations de ressources de déchargement ;
la réalisation (602), par le second élément de réseau, d'une décision d'admission de ressources de déchargement conformément aux informations de ressources de déchargement transportées par le message de plan de commande ; et
en réponse au fait qu'un résultat de la décision d'admission est l'admission, la réalisation (603), par le second élément de réseau, d'une configuration de ressources radio pour des ressources de déchargement admises et l'obtention d'informations de configuration de ressources radio correspondantes,
dans lequel les informations de ressources de déchargement comprennent : des informations d'objet de déchargement et des informations de type de porteuse de déchargement,
dans lequel un objet de déchargement dans les informations d'objet de déchargement est l'une de ce qui suit :
la totalité des QF dans la session PDU ;
une partie des QF dans la session PDU ; ou
une partie des paquets de données dans la totalité ou une partie des QF dans la session PDU,
dans lequel un type de porteuse de déchargement dans les informations de type de porteuse de déchargement comprend l'une ou toute combinaison de ce qui suit :
une porteuse de groupe de cellules secondaires, SCG ;
une porteuse divisée de SCG ; ou
une porteuse divisée de groupe de cellules maîtresses, MCG.

8. Procédé selon la revendication 7, dans lequel en réponse au fait qu'un objet de déchargement est tous les flux de qualité de service, QF, dans une session d'unité de données de protocole, PDU, ou une partie des QF dans la session PDU, les informations de configuration de ressources radio comprennent au moins :
des informations de relation de mise en correspondance entre l'objet de déchargement et une porteuse de déchargement ;
des informations de configuration d'une pile de protocoles radio de la porteuse de déchargement du côté du second élément de réseau ; et
des informations d'une adresse de couche de transport et d'une adresse de port de tunnel attribuées à l'objet de déchargement au niveau d'une interface de plan utilisateur de prochaine génération, NG-U.

9. Procédé selon la revendication 7, dans lequel en réponse au fait que la porteuse de déchargement est une porteuse divisée de groupe de cellules secondaires, SCG, les informations de configuration de ressources radio comprennent des informations de résultat de division du trafic de ressources radio ;
en réponse au fait que la porteuse divisée de SCG prend en charge une division de liaison montante, les informations de configuration de ressources radio comprennent des informations d'une adresse de port de tunnel attribuée par le second élément de réseau à la porteuse divisée de SGG au niveau d'une interface Xn-U.

10. Procédé selon la revendication 7, dans lequel en réponse au fait qu'un objet de déchargement fait partie de paquets de données dans la totalité ou une partie des QF dans une session PDU, les informations de configuration de ressources radio comprennent au moins :
des informations de configuration d'une pile de protocoles radio d'une porteuse de déchargement du côté du second élément de réseau ; et
des informations d'une adresse de port de tunnel attribuée pour la porteuse de déchargement au second élément de réseau au niveau d'une interface Xn-U.

11. Procédé selon la revendication 7, dans lequel en réponse au fait que les informations de ressources de déchargement comprennent une seconde indication, le procédé comprend en outre :
la détermination qu'il faut accepter un paquet de données transmis suggéré dans la seconde indication, et les informations de configuration de ressources radio comprenant des informations d'une adresse de port de tunnel attribuée à une interface Xn-U par le second élément de réseau pour recevoir le paquet de données transmis.

12. Dispositif de configuration d'une nouvelle architecture de qualité de service, QoS, dans un système à double connectivité, le dispositif comprenant :
un troisième module de réception (71), configuré pour recevoir un message de plan de commande provenant d'un premier élément de réseau, le message de plan de commande transportant des informations de ressources de déchargement ;
un module de décision d'admission (72), configuré pour réaliser, par un second élément de réseau, une décision d'admission de ressources de déchargement selon les informations de ressources de déchargement transportées par le message de plan de commande ; et
un module de configuration de ressources (73), configuré pour réaliser, par le second élément de réseau, en réponse au fait qu'un résultat de la décision d'admission est l'admission, une configuration de ressources radio pour des ressources de déchargement admises et obtenir des informations de configuration de ressources radio correspondantes,
dans lequel les informations de ressources de déchargement comprennent : des informations d'objet de déchargement et des informations de type de porteuse de déchargement,
dans lequel un objet de déchargement dans les informations d'objet de déchargement est l'une de ce qui suit :
la totalité des QF dans la session PDU ;
une partie des QF dans la session PDU ; ou
une partie des paquets de données dans la totalité ou une partie des QF dans la session PDU,
dans lequel un type de porteuse de déchargement dans les informations de type de porteuse de déchargement comprend l'une ou toute combinaison de ce qui suit :
une porteuse de groupe de cellules secondaires, SCG ;
une porteuse divisée de SCG ; ou
une porteuse divisée de groupe de cellules maîtresses, MCG.
